# EUROPEAN PATENT SPECIFICATION

(11) **EP 3 401 456 B1**
(45) Date of publication and mention of the grant of the patent: **05.06.2019**
(21) Application number: 18000417.8
(22) Date of filing: 02.05.2018
(51) Int. Cl.: E04B 1/86, E04B 1/84, E04B 9/04

(54) **PROCESS FOR MAKING A SOUND-ABSORBING ELEMENT, ELEMENT AND RELATED MANUFACTURING SYSTEM**
VERFAHREN ZUR HERSTELLUNG EINES SCHALLABSORBIERENDEN ELEMENTS, ELEMENT UND ZUGEHÖRIGES HERSTELLUNGSSYSTEM
PROCÉDÉ DE FABRICATION D'UN ÉLÉMENT INSONORISANT, ÉLÉMENT ET SYSTÈME DE FABRICATION ASSOCIÉ

(30) Priority: 08.05.2017 IT 201700049292
(43) Date of publication of application: 14.11.2018
(73) Proprietor: Conti, Claudio, 20833 Giussano (MB) (IT); Conti, Andrea, 23845 Costa Masnaga (LC) (IT)
(72) Inventor: Conti, Claudio, 20833 Giussano (MB) (IT); Conti, Andrea, 23845 Costa Masnaga (LC) (IT)
(74) Representative: Garavelli, Paolo

(56) References cited:
- WO-A1-2010/089271
- WO-A1-2013/159240
- WO-A1-2017/174475

## Description

The present invention refers to a process for making a sound-absorbing element, in particular of a sound-absorbing panel comprising acoustic absorbing and dissipating chambers, which can be used for making pieces of furniture such as for example doors, door leaves, furniture, dividing elements, or can be used as coating element for walls, ceilings or the like.

The invention further refers to a sound-absorbing element, in particular to a sound-absorbing panel obtained with such process and to a manufacturing system which uses such process.

Sound-absorbing panels are known in the art, which are used coupled and integrated with pieces of furniture made for example with base panels made of chipboard, plywood, or Medium Density Fiberboard, MDF, obtained from pressing wooded fibers, or Oriented Strand Board, OSB, comprising wooden material with synthetic resins or in general materials which can be mechanically worked through stamping and/or pressing and thin veneers, which are coated with a coating sheet having an aesthetic and decorative function; the coating sheet is made for example of thermoplastic sheets, rolled sections, CPL, wooden essence, decorative papers, generic plastic materials, methacrylate, natural shredded materials (veneers), plastic laminates, or can be composed of a layer of melamine paper formed of sheets of paper whose thickness is a few tenths of mm, impregnated with melamine resin (so-called melamine panels).

The known sound-absorbing panels are equipped with through-holes, grooves or slits obtained by means of mechanical workings of drilling or milling on a base panel, on which a micro-drilled coating sheet is afterwards applied, for example glued and pressed, so that the holes, grooves or slits of the base panel are in communication with the micro-holes of the coating sheet.

These known sound-absorbing panels has the problem of having a visible external surface whose appearance is different from that of the pieces of furniture which must be coupled or integrated therewith, both due to the difficulty of finding coating sheets equal to those of the panel with which the pieces of furniture are made, and due to reasons linked to their production process.

In fact, with known production processes it is necessary to use coating sheets whose thickness is greater than 0.3 mm to prevent the appearance of markings on the coating sheet next to the holes mechanically obtained in the base panel, and it is therefore not possible to use coating sheets made of the same materials of the coupled pieces of furniture, for example when melamine panels are used, coated with melamine paper whose thickness is less than 0.3 mm; moreover, known sound-absorbing panels can have burning eyelets around the micro-holes when they are obtained through laser micro-drilling.

Another problem of known production processes for sound-absorbing panels is given by their cost, which is much greater than that of a similar non-sound-absorbing panel used for making furniture elements.

Patent application WO2017/174475 A1 discloses a sound absorbing process of making a sound-absorbing element comprising all the features of the preamble of claim 1 as well as the corresponding sound absorbing element, and a manufacturing system to perform said process comprising all the features of the preamble of claim 14.

Object of the present invention is solving the above prior art problems, by providing a process for making a sound-absorbing element, a sound-absorbing element and a manufacturing system which allow making a sound-absorbing element which has the same aesthetic appearance, because made with identical materials, as that of the furniture elements with which it must be coupled or integrated, and has a much lower cost with respect to known sound-absorbing elements, comparable with that of standard acoustic panels used for making the furniture elements.

The above and other objects and advantages of the invention, as will result from the following description, are obtained with a process for making a sound-absorbing element, a sound-absorbing element and a manufacturing system as claimed in their respective independent claims. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as appears from the enclosed claims.

The present invention will be better described by some preferred embodiments thereof, provided as a non-limiting example, with reference to the enclosed drawings, in which:

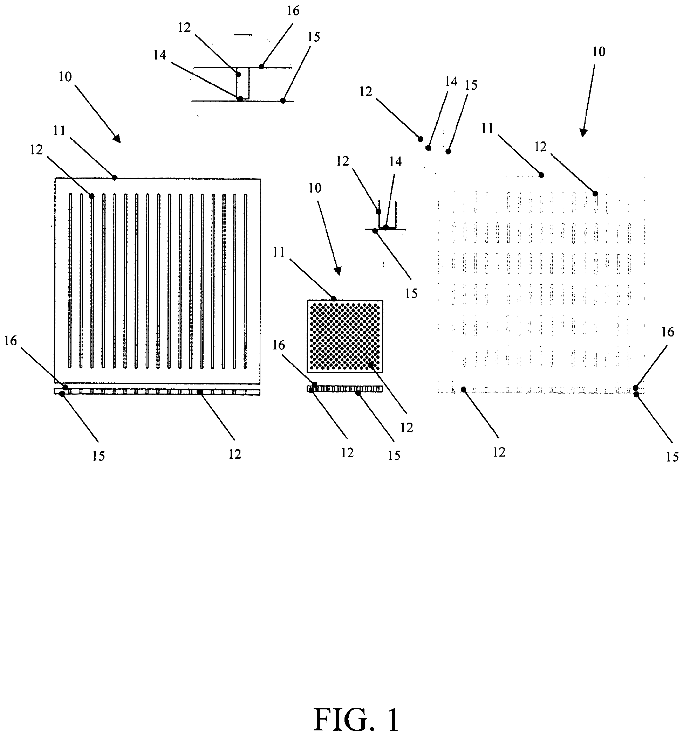

- Figure 1 shows schematic views of sound-absorbing elements according to the present invention;

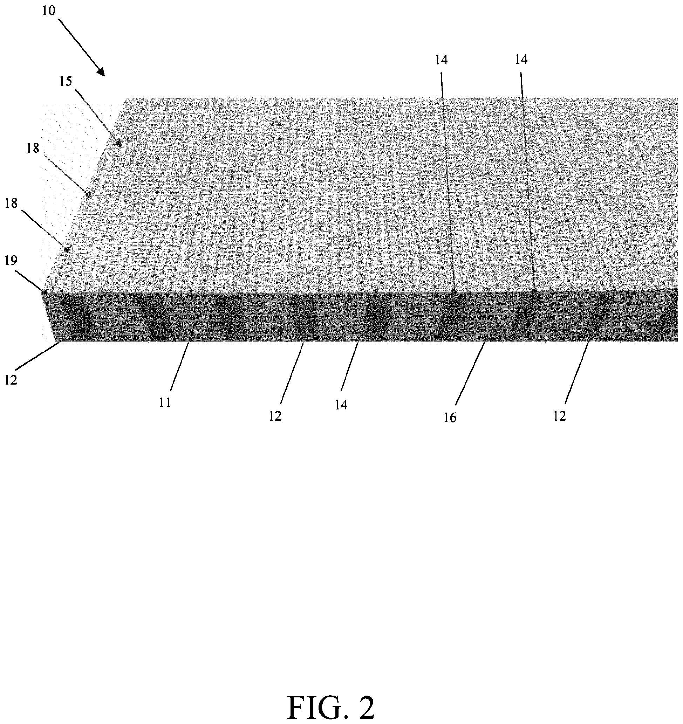

- Figure 2 is a perspective view of a section of a sound-absorbing element according to the present invention;

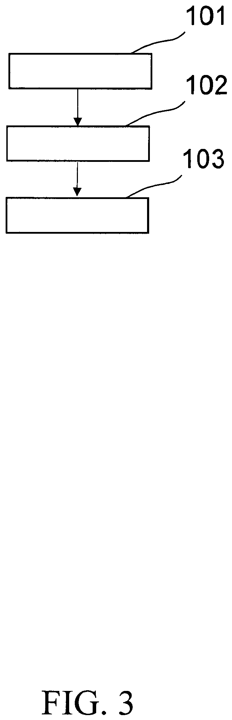

- Figure 3 is a block diagram of a process for making a sound-absorbing element according to the present invention;
- Figure 4 is a side schematic view of the manufacturing system according to the present invention at rest; and
- Figure 5 is a side schematic view of the manufacturing system according to the present invention at work.

With reference to the Figures, a sound-absorbing element 10 according to the invention is shown and described, comprising a base element 11 made for example of chipboard, plywood, Medium Density Fiberboard, MDF, Oriented Strand Board, OSB, PVC, gypsum, cork and similar materials adapted to be worked with mechanical workings like milling, or materials mechanically workable with stamping and/or pressing, having a first visible surface 15 adapted to be exposed to a sound source when the panel is installed, and a second surface 16 opposite to the first one, which can for example be oriented against a wall or be part of a piece of furniture when the sound-absorbing element 10 is installed; preferably, the base element 11 is a panel and the two surfaces 15, 16 are plane or curved surfaces.

The sound-absorbing element 10 comprises a plurality of blind recesses 12, which therefore are not through-recesses and do not cross the whole thickness of the base element 11, being shaped as holes, grooves or slits, obtained on the second surface 16 of the base element 11, and having a background wall 14 comprising a plurality of through-micro-holes 18, adapted to communicate each blind recess 12 with the outside through the first visible surface 15 of the sound-absorbing element 10 to form acoustic absorbing and dissipating chambers on the second surface 16, which preferably is the non-visible surface, of the base element 11 of the sound-absorbing element 10.

The blind recesses 12 are made on the second surface 16 of the base element 11, which preferably is non-visible when the sound-absorbing element 10 is installed, by means of mechanical workings of drilling or milling, in order not to drill the first visible surface 15, and keep the background wall 14 of the blind recesses 12 intact; the micro-holes 18 which communicate each blind recess 12 with the outside through the first surface 15 are preferably made through laser micro-drilling, more preferably drilling the background wall 14 from the part of the blind recesses 12.

Preferably, the background wall 14 has a thickness included between 0.2 mm and 5 mm, more preferably included between 0.5 mm and 1 mm, and the recesses have a width included between 3 mm and 22 mm and the micro-holes have a diameter included between 0.1 mm and 2 mm.

Preferably, the sound-absorbing element 10 comprises a coating sheet 19, for example obtained with thermoplastic sheets, rolled sections, CPL, wooden essence, decorative papers, generic plastic materials, methacrylate, natural shredded materials (veneers), plastic laminates, or composed of a layer of melamine paper fastened, for example glued, on the first visible surface 15 of the base element 11, and the micro-holes 18 are made in order to cross the background wall 14 of the blind recess 12 and the coating sheet 19 to communicate the blind recess 12 with the outside.

The process for making a sound-absorbing element 10 according to the invention comprises the following steps:
- a first step 101 of making the blind recesses 12 on the second surface 16 of the base element 11, which preferably is not visible when the sound-absorbing element 10 is installed, by means of mechanical workings, for example of drilling or milling or stamping and/or pressing;
- a second step 102 of stopping the mechanical working of step 101, performed when the background wall 14 of the blind recesses 12 has a thickness included between 0.2 mm and 5 mm, more preferably included between 0.5 mm and 1 mm in order not to drill the first visible surface 15, and keep the background wall 14 of the blind recesses 12 intact;
- a third step 103 of making the through-micro-holes 18 adapted to communicate each blind recess 12 with the outside, performed on the background wall 14 of the blind recesses 12 through the first surface 15, through laser micro-drilling, performed by drilling the background wall 14 from the part of the second surface 16 of the base element 11, which preferably is not visible when the sound-absorbing element 10 is installed, starting the laser micro-drilling operation inside the blind recesses 12, after having lifted the sound-absorbing element 10 from a working surface leaving a space for performing the laser micro-drilling, after having stretched the lifted sound-absorbing element 10 and after having unmovably fastened the stretched sound-absorbing element 10.

Advantageously, the execution of the laser micro-drilling inside the blind recesses 12, by positioning the laser apparatus from the part of the second surface 16 of the base element 11 on the which the blind recesses 12 are drilled, allows obtaining the first visible surface 15 of the sound-absorbing element 10 with a high quality appearance, free from burning eyelets.

In a preferred way, the process for making a sound-absorbing element 10 of the invention is performed on a sound-absorbing element 10 which comprises the coating sheet 19 fastened on the first visible surface 15 of the base element 11, and the third step 103 of making the micro-holes 18 is performed by drilling the background wall 14 of the blind recess 12 and the coating sheet 19 to communicate the blind recess 12 with the outside.

The process for making a sound-absorbing element 10 is performed on a manufacturing system comprising a machine tool of a known type adapted to perform the mechanical workings of steps 101 and 102 for making the blind recesses 12 on the second surface 16 of the base element 11, and a laser micro-drilling machine 52 adapted to perform the third step 103 of making the through-micro-holes 18 on the background wall 14 of the blind recesses 12; preferably, the manufacturing system comprises an overturning element to overturn the base element 11 at the end of steps 101 and 102 of making the blind recesses 12 and transfer it to the laser micro-drilling machine to perform the third step 103 of making the through-micro-holes 18 on the background wall 14 of the blind recesses 12.

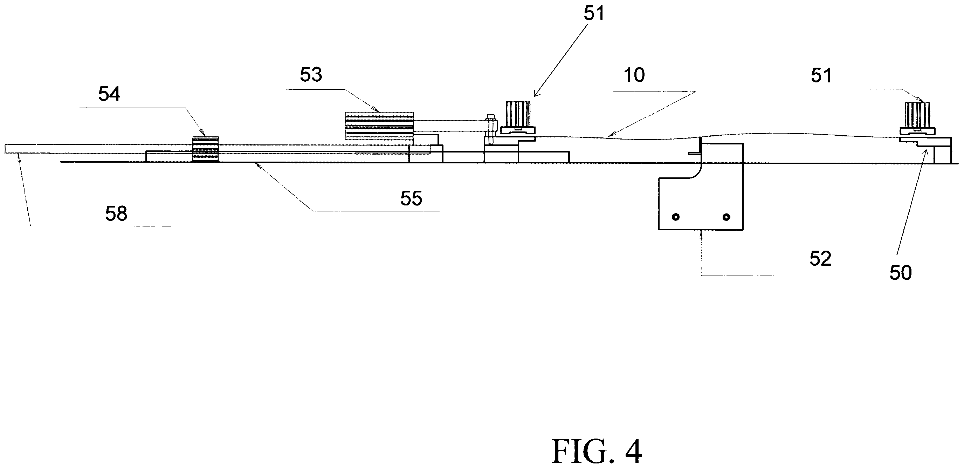

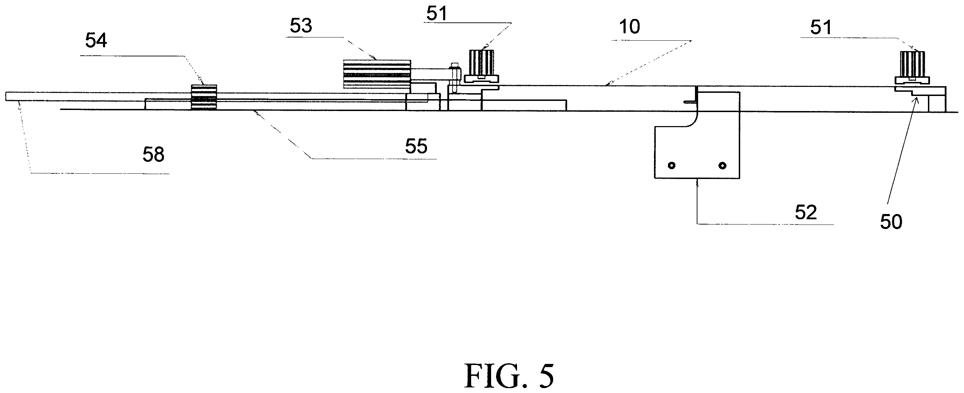

In particular, as shown in Figures 4 and 5, the manufacturing system comprises the manufacturing system further comprises:
- a plurality of spacing elements 50 adapted to lift and space the sound-absorbing element 10 from a working plane of the manufacturing system, thereby creating a space in which the laser micro-drilling machine slides and operates;
- at least one tensioning element 53 adapted to tension and stretch the sound-absorbing element 10 before performing the laser micro-drilling operation; the tensioning element 53 slides on suitable adjustment guides 58 to be adapted to the sizes of the sound-absorbing element 10 to be tensioned; and
- a plurality of locking elements 51 adapted to fasten the tensioned sound-absorbing element 10, once lifted and tensioned, the locking elements 51 sliding on suitable sliding guides 55.

Everything is then blocked by at least one suitable locking brake 54, once having reached the correct working position for the sound-absorbing element 10.

With the above arrangement, the side of the sound-absorbing element 10 which is subjected to laser micro-drilling is then lifted from the working plane so that it is not in contact with anything which could damage it; moreover, the working space thereby created prevents the laser light from "bouncing" and therefore from ruining the above micro-drilled side.

The tensioning operation performed by the above tensioning elements 53 is useful when the sound-absorbing element 10 is a non-rigid panel (laminate sheet, etc.): in this way, it can be loaded in the manufacturing system with the tensioning elements 53 at rest (Figure 4), and then it can be tensioned to make it rigid enough to be laser-worked.

The manufacturing system which uses the process for making a sound-absorbing element 10 according to the invention further comprises a functional command and control system of a known type, adapted to control and actuate, through controlling and managing means of a known type, composed for example of an electronic unit programmed for such purpose, the actuation of the machine tool for making the blind recesses 12 on the second surface 16 of the base element 11, and of the laser micro-drilling machine.

Advantageously, the process according to the invention allows making a sound-absorbing element which has an aesthetic appearance equal to that of the furniture elements with which it must be coupled or integrated, and has a reduced cost; the sound-absorbing elements, in particular the panels, according to the invention can advantageously be used to make furniture elements such as doors, door leaves, furniture, dividing elements, in addition to be used as coating element for walls, ceilings or the like.

## Claims

1. Process for making a sound-absorbing element (10) comprising a base element (11) having a first visible surface (15) adapted to be exposed to a sound source when the panel is installed, and a second surface (16) opposite to the first one, the process comprising the following steps:
- a first step (101) of making blind recesses (12), having a background wall (14), on the second surface (16) of the base element (11) by means of mechanical workings;
- a second step (102) of stopping the mechanical workings of step (101) performed in order not to drill the first visible surface (15), and keep the background wall (14) of the blind recesses (12) intact;
- a third step (103) of making through-micro-holes (18) adapted to communicate each blind recess (12) with the outside, performed on the background wall (14) of the blind recesses (12) through the first surface (15) through micro-drilling;
**characterized in that** the third step (103) of making micro-holes (18) is performed by drilling the background wall (14) from the part of the second surface (16) of the base element (11), starting the micro-drilling operation inside the blind recesses (12), after having lifted the sound-absorbing element (10) from a working surface leaving a space for performing the laser micro-drilling, after having stretched the lifted sound-absorbing element (10) and after having unmovably fastened the stretched sound-absorbing element (1)0.

2. Process for making a sound-absorbing element (10) according to claim 1, **characterized in that** the third step (103) of making through-micro-holes (18) adapted to communicate each blind recess (12) with the outside is performed through laser micro-drilling.

3. Process for making a sound-absorbing element (10) according to claim 1 or 2, **characterized in that** the second step (102) of stopping the mechanical workings of step (101) is performed when the background wall (14) of the blind recesses (12) has a thickness included between 0.2 mm and 5 mm.

4. Process for making a sound-absorbing element (10) according to claim 1 or 2, **characterized in that** the second step (102) of stopping the mechanical workings of step (101) is performed when the background wall (14) of the blind recesses (12) has a thickness included between 0.5 mm and 1 mm.

5. Process for making a sound-absorbing element (10) according to any one of the previous claims, **characterized in that** the process is performed on a sound-absorbing element (10) which comprises a coating sheet (19) fastened on the first visible surface (15) of the base element (11), and the third step (103) of making the micro-holes (18) is performed by drilling the background wall (14) of the blind recess (12) and the coating sheet (19) to communicate the blind recess (12) with the outside.

6. Sound-absorbing element (10) made through the process according to any one of the previous claims, the sound-absorbing element (10) comprising a base element (11) having a first visible surface (15) adapted to be exposed to a sound source when the panel is installed, and a second surface (16), opposite to the first one, comprising a plurality of blind recesses (12) having a background wall (14) comprising a plurality of through-micro-holes (18) adapted to communicate each blind recess (12) with the outside through the first visible surface (15) to form acoustic absorbing and dissipating chambers.

7. Sound-absorbing element (10) according to claim 6, **characterized in that** the background wall (14) has a thickness included between 0.2 mm and 5 mm, the recesses have a width included between 3 mm and 22 mm and the micro-holes have a diameter included between 0.1 mm and 2 mm.

8. Sound-absorbing element (10) according to claim 7, **characterized in that** the background wall (14) has a thickness included between 0.5 mm and 1 mm.

9. Sound-absorbing element (10) according to any one of claims 6 to 8, **characterized in that** it comprises a coating sheet (19) fastened on the first visible surface (15) of the base element (11), and the micro-holes (18) cross the background wall (14) of the blind recess (12) and the coating sheet (19) to communicate the blind recess (12) with the outside.

10. Sound-absorbing element (10) according to any one of claims 6 to 9, **characterized in that** the blind recesses (12) are shaped as holes or grooves or slits.

11. Sound-absorbing element (10) according to any one of claims 6 to 10, **characterized in that** the base element (11) is a panel and the surfaces (15, 16) are plane or curved surfaces.

12. Piece of furniture comprising a sound-absorbing element (10) according to any one of claims 6 to 11.

13. Coating element comprising a sound-absorbing element (10) according to any one of claims 6 to 11.

14. Manufacturing system to perform the process for making a sound-absorbing element (10) according to any one of claims 1 to 5, the manufacturing system comprising a machine tool adapted to perform the mechanical workings of the first step (101) and of the second step (102) for making the blind recesses (12) on the second surface (16) of the base element (11), and a laser micro-drilling machine adapted to perform the third step (103) of making the through-micro-holes (18) on the background wall (14) of the blind recesses (12), **characterized in that** the manufacturing system further comprises:
- a plurality of spacing elements (50) adapted to lift and space the sound-absorbing element (10) from a working plane of the manufacturing system, thereby creating a space in which the laser micro-drilling machine slides and operates;
- at least one tensioning element (53) adapted to tension and stretch the sound-absorbing element (10) before performing the laser micro-drilling operation; and
- a plurality of locking elements (51) adapted to fasten the tensioned sound-absorbing element (10).

15. Manufacturing system according to claim 14, **characterized in that** it comprises an overturning element to overturn the base element (11) at the end of the first step (101) and of the second step (102) of making the blind recesses (12) and transfer it to the micro-drilling machine to perform the third step (103) of making the through-micro-holes (18) on the background wall (14) of the blind recesses (12).

## Patentansprüche

1. Verfahren für die Herstellung eines schallschluckenden Elements (10), das ein Basiselement (11) enthält, welches eine erste sichtbare Oberfläche (15) hat, die dazu dient, einer Schallquelle ausgesetzt zu werden, wenn das Paneel installiert ist, und eine zweite Oberfläche (16) gegenüber der ersten, die folgende Phasen enthält:
- eine erste Phase (101) der Herstellung von Blindaussparungen (12), die eine Stirnwand (14) auf der zweiten Oberfläche (16) des Basiselements (11) durch mechanische Bearbeitungen haben;
- eine zweite Phase (102) mit Stillstand der mechanischen Bearbeitung der Phase (101), die so ausgeführt wird, dass die erste sichtbare Oberfläche (15) nicht durchbohrt wird und die Stirnwand (14) der Blindaussparungen (12) unversehrt gehalten wird;
- eine dritte Phase (103) der Ausführung von Mikro-Durchgangsbohrungen (18), die dazu dienen, jede Blindaussparung (12) mit dem Außenbereich in Verbindung zu bringen, die an der Stirnwand (14) der Blindaussparungen (12) durch die erste Oberfläche (15) durch Mikrobohrung ausgeführt wird,
das **dadurch gekennzeichnet ist, dass** die dritte Phase (103) der Herstellung der Mikrobohrungen (18) durch Bohren der Stirnwand (14) von der Seite der zweiten Oberfläche (16) des Basiselements (11) ausgeführt wird, wobei die Arbeit der Mikrobohrung in den Blindaussparungen (12) begonnen wird, nachdem das schallschluckende Element (10) von einer Arbeitsfläche angehoben und Platz für die Ausführung der Mikro-Laserbohrung frei gelassen wurde, nachdem das angehobene schallschluckende Element (10) angezogen und nachdem das angezogene schallschluckende Element (10) unbewegbar befestigt wurde.

2. Verfahren für die Herstellung eines schallschluckenden Elements (10) gemäß Patentanspruch 1, das **dadurch gekennzeichnet ist, dass** die dritte Phase (103) der Ausführung von Mikro-Durchgangsbohrungen (18), die dazu dienen, jede Blindaussparung (12) mit dem Außenbereich in Verbindung zu bringen, durch Mikro-Laserbohrung ausgeführt wird.

3. Verfahren für die Herstellung eines schallschluckenden Elements (10) gemäß Patentanspruch 1 oder 2, das **dadurch gekennzeichnet ist, dass** die zweite Phase (102) des Stillstandes der mechanischen Bearbeitung der Phase (101) ausgeführt wird, wenn die Stirnwand (14) der Blindaussparungen (12) eine Dicke von 0,2 mm bis 5 mm hat.

4. Verfahren für die Herstellung eines schallschluckenden Elements (10) gemäß der Patentansprüche 1 oder 2, das **dadurch gekennzeichnet ist, dass** die zweite Phase (102) des Stillstandes der mechanischen Bearbeitung der Phase (101) ausgeführt wird, wenn die Stirnwand (14) der Blindaussparungen (12) eine Dicke von 0,5 mm bis 1 mm hat.

5. Verfahren für die Herstellung eines schallschluckenden Elements (10) gemäß einem beliebigen der vorhergehenden Patentansprüche, das **dadurch gekennzeichnet ist, dass** das Verfahren an einem schallschluckenden Element (10) ausgeführt wird, das eine Schutzfolie (19) enthält, die an der ersten sichtbaren Oberfläche (15) des Basiselements (11) befestigt ist, und die dritte Phase (103), dass die Mikrobohrungen (18) durch Bohren der Stirnwand (14) der Blindaussparung (12) und der Schutzfolie (19) ausgeführt werden, um die Blindaussparung (12) mit dem Außenbereich in Verbindung zu bringen.

6. Schallschluckendes Element (10), das durch das Verfahren gemäß einem beliebigen der vorhergehenden Patentansprüche hergestellt wird, das schallschluckende Element (10) enthält ein Basiselement (11), das eine erste sichtbare Oberfläche (15) hat, die dazu dient, einer Schallquelle ausgesetzt zu werden, wenn das Paneel installiert ist, und eine zweite Oberfläche (16) gegenüber der ersten, die mehrere Blindaussparungen (12) enthält, welche eine Stirnwand (14) haben, die mehrere Mikro-Durchgangsbohrungen (18) enthält, die dazu dienen, jede Blindaussparung (12) mit dem Außenbereich durch die erste sichtbare Oberfläche (15) in Verbindung zu bringen, um Schallabsorptions- und Dämpfungskammern zu bilden.

7. Schallschluckendes Element (10) gemäß Patentanspruch 6, das **dadurch gekennzeichnet ist, dass** die Stirnwand (14) eine Dicke von 0,2 bis 5 mm hat, die Aussparungen eine Breite von 3 mm bis 22 mm haben und die Mikrobohrungen einen Durchmesser von 0,1 mm bis 2 mm haben.

8. Schallschluckendes Element (10) gemäß Patentanspruch 7, das **dadurch gekennzeichnet ist, dass** die Stirnwand (14) eine Dicke von 0,5 mm bis 1 mm hat.

9. Schallschluckendes Element (10) gemäß einem beliebigen der Patentansprüche von 6 bis 8, das **dadurch gekennzeichnet ist, dass** es eine Schutzfolie (19) enthält, die an der ersten sichtbaren Oberfläche (15) des Basiselements (11) befestigt ist, und dass die Mikrobohrungen (18) die Stirnwand (14) der Blindaussparung (12) und der Schutzfolie (19) durchqueren, um die Blindaussparung (12) mit dem Außenbereich in Verbindung zu bringen.

10. Schallschluckendes Element (10) gemäß einem beliebigen der Patentansprüche von 6 bis 9, das **dadurch gekennzeichnet ist, dass** die Blindaussparungen (12) die Form von Bohrungen oder Nuten oder Ösen haben.

11. Schallschluckendes Element (10) gemäß einem beliebigen der Patentansprüche von 6 bis 10, das **dadurch gekennzeichnet ist, dass** das Basiselement (11) ein Paneel ist und dass die Oberflächen (15, 16) ebene oder gebogene Oberflächen sind.

12. Einrichtungselement, das ein schallschluckendes Element (10) gemäß einem beliebigen der Patentansprüche von 6 bis 11 enthält.

13. Beschichtungselement (10), das ein schallschluckendes Element (10) gemäß einem beliebigen der Patentansprüche von 6 bis 11 enthält.

14. Produktionssystem für die Ausführung des Verfahrens für die Herstellung eines schallschluckenden Elements (10) gemäß einem beliebigen der Patentansprüche von 1 bis 5, das Produktionssystem enthält eine Werkzeugmaschine, die dazu dient, mechanische Bearbeitungen der ersten Phase (101) und der zweiten Phase (102) der Herstellung von Blindaussparungen (12) auf der zweiten Oberfläche (16) des Basiselements (11) auszuführen, und einen Mikrobohrer, der dazu dient, die dritte Phase (103) der Ausführung der Mikro-Durchgangsbohrungen (18) an der Stirnwand (14) der Blindaussparungen (12) auszuführen, das Produktionssystem ist **dadurch gekennzeichnet, dass** es Folgendes enthält:
- mehrere Distanzelemente (50) die dazu dienen, das schallschluckende Element (10) von einer Arbeitsfläche des Produktionssystems anzuheben und zu distanzieren und auf diese Weise einen Platz zu schaffen, auf dem der Mikro-Laserbohrer gleitet und arbeitet;
- mindestens ein Spannelement (53), das dazu dient, das schallschluckende Element (10) vor der Ausführung des Mikro-Laserbohrverfahrens zu spannen und anzuziehen; und
- mehrere Blockierelemente (51), die dazu dienen, das gespannte schallschluckende Element (10) zu befestigen.

15. Produktionssystem gemäß Patentanspruch 14, das **dadurch gekennzeichnet ist, dass** es ein Kippelement enthält, um das Basiselement (11) am Ende der ersten Phase (101) und der zweiten Phase (102) der Ausführung der Blindaussparungen (12) zu kippen und an den Mikrobohrer zu übertragen, um die dritte Phase (103) der Ausführung der Mikro-Durchgangsbohrungen (18) an der Stirnwand (14) der Blindaussparungen (12) auszuführen.

## Revendications

1. Procédure pour réaliser un élément insonorisant (10) comprenant un élément de base (11) ayant une première surface apparente (15) apte à être exposée à une source sonore quand le panneau est installé et une seconde surface (16) opposée à la première, comprenant les étapes suivantes :
- une première étape (101) de réalisation de rainures aveugles (12), dotées d'une paroi arrière (14), sur la seconde surface (16) de l'élément de base (11) au moyen d'usinages mécaniques ;
- une seconde étape (102) d'arrêt de l'usinage mécanique de l'étape (101) servant à ne pas percer la première surface apparente (15) et maintenir intacte la paroi arrière (14) des rainures aveugles (12) ;
- une troisième étape (103) de réalisation de micro-trous traversants (18) aptes à mettre en communication chaque rainure aveugle (12) avec l'extérieur, qui est exécutée sur la paroi arrière (14) des rainures aveugles (12) à travers la première surface (15) au moyen d'un micro-perçage,
**caractérisée en ce que** la troisième étape (103) de réalisation de micro-trous traversants (18) est exécutée en perçant la paroi arrière (14) du côté de la seconde surface (16) de l'élément de base (11), en commençant l'opération de micro-perçage à l'intérieur des rainures aveugles (12), après avoir soulevé l'élément insonorisant (10) depuis une surface de travail en laissant un espace pour exécuter le micro-perçage laser, après avoir tiré l'élément insonorisant (10) précédemment soulevé et l'avoir fixé de manière inamovible.

2. Procédure pour la réalisation d'un élément insonorisant (10), selon la revendication 1, **caractérisée en ce que** la troisième étape (103) de réalisation des micro-trous traversants (18), aptes à mettre en communication chaque rainure aveugle (12) avec l'extérieur, est exécutée par micro-perçage laser.

3. Procédure pour la réalisation d'un élément insonorisant (10), selon la revendication 1 ou 2, **caractérisée en ce que** la seconde étape (102) d'arrêt de l'usinage mécanique de l'étape (101) est exécutée quand la paroi arrière (14) des rainures aveugles (12) a une épaisseur comprise entre 0,2 mm et 5 mm.

4. Procédure pour la réalisation d'un élément insonorisant (10), selon la revendication 1 ou 2, **caractérisée en ce que** la seconde étape (102) d'arrêt de l'usinage mécanique de l'étape (101) est exécutée quand la paroi arrière (14) des rainures aveugles (12) a une épaisseur comprise entre 0,5 mm et 1 mm.

5. Procédure pour la réalisation d'un élément insonorisant (10), selon l'une des revendications précédentes, **caractérisée en ce qu'**elle est exécutée sur un élément insonorisant (10) qui comprend une feuille de revêtement (19) fixée sur la première surface apparente (15) de l'élément de base (11), et la troisième étape (103) de réalisation des micro-trous (18) est exécutée en perçant la paroi arrière (14) de la rainure aveugle (12) et la feuille de revêtement (19) pour mettre en communication la rainure aveugle (12) avec l'extérieur.

6. Elément insonorisant (10), réalisé à travers la procédure selon l'une des revendications précédentes, comprenant un élément de base (11) ayant une première surface apparente (15) apte à être exposée à une source sonore quand le panneau est installé et une seconde surface (16), opposée à la première, comprenant une pluralité de rainures aveugles (12) ayant une paroi arrière (14) comprenant une pluralité de micro-trous traversants (18) aptes à mettre en communication chaque rainure aveugle (12) avec l'extérieur à travers la première surface apparente (15) pour former des chambres d'absorption et de dissipation acoustique.

7. Elément insonorisant (10), selon la revendication 6, **caractérisé en ce que** la paroi arrière (14) a une épaisseur comprise entre 0,2 mm et 5 mm, les rainures ont une largeur comprise entre 3 mm et 22 mm et les micro-trous ont un diamètre compris entre 0.1 mm et 2 mm.

8. Elément insonorisant (10), selon la revendication 7, **caractérisé en ce que** la paroi arrière (14) a une épaisseur comprise entre 0,5 mm et 1 mm.

9. Elément insonorisant (10), selon l'une des revendications de 6 à 8, **caractérisé en ce qu'**il comprend une feuille de revêtement (19) fixée sur la première surface apparente (15) de l'élément de base (11) ; les micro-trous (18) traversent la paroi arrière (14) de la rainure aveugle (12) et la feuille de revêtement (19) pour mettre en communication la rainure aveugle (12) avec l'extérieur.

10. Elément insonorisant (10), selon l'une des revendications de 6 à 9, **caractérisé en ce que** les rainures aveugles (12) sont en forme de trous, de cannelures ou de trous oblongs.

11. Elément insonorisant (10), selon l'une des revendications de 6 à 10, **caractérisé en ce que** l'élément de base (11) est un panneau et les surfaces (15, 16) sont plates et courbes.

12. Elément de décor comprenant un élément insonorisant (10), selon l'une des revendications de 6 à 11.

13. Elément de revêtement comprenant un élément insonorisant (10), selon l'une des revendications de 6 à 11.

14. Système de production pour exécuter la procédure servant à réaliser un élément insonorisant (10), selon l'une des revendications de 1 à 5 ; le système de production comprend une machine-outil apte à exécuter les usinages mécaniques de la première étape (101) et de la seconde étape (102) de réalisation des rainures aveugles (12) sur la seconde surface (16) de l'élément de base (11), et une micro-perceuse apte à exécuter la troisième étape (103) de réalisation des micro-trous traversants (18) sur la paroi arrière (14) des rainures aveugles (12) ; **caractérisé en ce qu'**il système comprend :
- une pluralité d'éléments intercalaires (50) aptes à soulever et distancer l'élément insonorisant (10) d'un plan de travail du système de production en créant ainsi un espace où la micro-perceuse laser coulisse et travaille ;
- au moins un élément tendeur (53) apte à tendre et tirer l'élément insonorisant (10) avant d'exécuter l'opération de micro-perçage laser ; et
- une pluralité d'éléments de blocage (51) aptes à fixer l'élément insonorisant (10) qui a été tendu.

15. Système de production selon la revendication 14, **caractérisé en ce qu'**il comprend un élément renverseur pour faire basculer l'élément de base (11) au terme de la première étape (101) et de la seconde étape (102) de réalisation des rainures aveugles (12) puis le transférer à la micro-perceuse pour exécuter la troisième étape (103) de réalisation des micro-trous traversants (18) sur la paroi arrière (14) des rainures aveugles (12).
